# EUROPEAN PATENT SPECIFICATION

(11) **EP 2 759 943 B1**
(45) Date of publication and mention of the grant of the patent: **30.12.2020**
(21) Application number: 12833381.2
(22) Date of filing: 14.06.2012
(51) Int. Cl.: G06F 21/78

(54) **FILE ENCRYPTION METHOD AND DEVICE, FILE DECRYPTION METHOD AND DEVICE**
DATEIVERSCHLÜSSELUNGSVERFAHREN UND VORRICHTUNG, DATEIENTSCHLÜSSELUNGSVERFAHREN UND VORRICHTUNG
PROCÉDÉ ET DISPOSITIF DE CHIFFREMENT DE FICHIERS, PROCÉDÉ ET DISPOSITIF DE DÉCHIFFREMENT DE FICHIERS

(30) Priority: 22.09.2011 CN 201110283896
(43) Date of publication of application: 30.07.2014
(73) Proprietor: Tencent Technology (Shenzhen) Co., Ltd, Guangdong 518057 (CN)
(72) Inventor: BI, Tingli, Shenzhen Guangdong 518057 (CN)
(74) Representative: AWA Sweden AB
(86) International application number: PCT/CN2012/076890
(87) International publication number: WO 2013/040915

(56) References cited:
- CN-A- 1 553 347
- CN-A- 1 794 210
- CN-A- 101 398 824
- CN-A- 101 877 246
- CN-A- 101 877 246
- CN-A- 102 053 925
- TW-A- 201 040 775
- US-A1- 2007 180 257
- US-A1- 2013 080 773
- Anonymous: "Loop device - Wikipedia, the free encyclopedia", , 19 April 2010 (2010-04-19), XP055625758, Retrieved from the Internet: URL:https://web.archive.org/web/2010041901 3351/https://en.wikipedia.org/wiki/Loop_de vice [retrieved on 2019-09-24]

## Description

The application claims priority of a CN patent application serial No. 201110283896.5, titled "method and apparatus for file encryption/decryption" and filed on September 22, 2011.

### FIELD OF THE INVENTION

The present invention relates to data processing technique, and more particularly to a method and an apparatus for file encryption/decryption.

### BACKGROUND OF THE INVENTION

Currently, more commonly used file encrypting methods are: direct encryption, transparent file encryption, and the encryption interface provided by the operating system. These three encryption methods are all capable of achieving file encryption; however, each of them has its own shortcomings described as follows.

Direct encryption is used to directly encrypt files in the disk, and WinRar™ is a typical representative. However, the shortcoming of direct encryption is: encrypted files should be manually decrypted every time before using the files, and also the decrypted files need to be manually encrypted after using. This method heavily depends on manual operation and the whole procedure is complex and cumbersome.

Transparent file encryption uses filter driver of Windows to encrypt/decrypt files, which overcomes the shortcoming of direct encryption that the files should be manually encrypted/decrypted. However, transparent file encryption still has the shortcoming that the filter driver of Windows exists on the file system driver of Windows. As a result, it is necessary to take a lot of filtering operations to all the files if the filter driver is used, and these filtering operations seriously affect system performance. US2007180257 shows a virtual space for a hard disk.

According to the above description, an urgent problem need to be solved is provide a reliable, safe and effective file encrypting method.

### SUMMARY OF THE INVENTION

The object of the present invention is to provide a file encrypting method and apparatus, thereby achieving highly-reliable, safe and effective file encryption. The invention is as defined in the appended claims.

Another object of the present invention is to provide a file decrypting method and apparatus corresponding to the above file encrypting method and apparatus, thereby achieving file decryption using a virtual disk without reducing reading performance of the file.

Some aspects include:
A file encrypting method includes creating a virtual disk, the method further includes: the virtual disk receiving a writing request from a file system, encrypting data in the writing request, and notifying the file system to write the encrypted data into a corresponding physical disk, accordingly, the file system receives a notification from the virtual disk and then writes the encrypted data into the corresponding physical disk.

A file decrypting method includes a step of creating a virtual disk, the method further includes: a step A, the virtual disk redirecting a received reading request from the virtual disk to a physical disk so that the file system fetches data required by the reading request from the physical disk; and a step B, the virtual disk receiving the data fetched by the file system from the physical disk, decrypting the received data, and sending the decrypted data to the file system. The file system provides the decrypted data to a user end.

A file encrypting apparatus includes a virtual disk creating unit, and a virtual disk driving unit. The virtual disk creating unit is configured for creating a virtual disk. The virtual disk driving unit is configured for receiving a writing request from a file system, encrypting data in the writing request, and notifying file system to write the encrypted data into a corresponding physical disk. The file system receives a notification from the virtual disk and then writes the encrypted data into the corresponding physical disk.

A file decrypting apparatus includes a virtual disk creating unit, and a virtual disk driving unit. The virtual disk creating unit is configured for creating a virtual disk. The virtual disk driving unit includes a redirecting module and a decrypting module. The redirecting module is configured for redirecting a reading request received from a file system to a physical disk, so that the file system fetches data required by the reading request from the physical disk. The decrypting module is configured for receiving the data fetched by the file system from the physical disk, decrypting the received data and sending the decrypted data to the file system. The file system provides the decrypted data to a user end.

As shown in the technical solutions stated above, in the present invention, data in the writing request is encrypted with the virtual disk, the data required by the reading request is decrypted with the virtual disk, and this method improves reliability, safety and effectiveness of file encryption.

### BRIEF DESCRIPTION OF THE DRAWINGS

To illustrate the technical solution according to embodiments of the present invention more clearly, drawings to be used in the description of the embodiments are described in brief as follows. Obviously, the drawings in the following description are merely some embodiments of the present invention. It is to be noted that for those ordinarily skilled in the art, other drawings can be fetched according to these drawings without doing any creative work.
FIG. 1 is a flowchart of a method for creating virtual disk according to an embodiment of the present invention;
FIG. 2 is an abstract flowchart provided by embodiment 1 of the present invention;
FIG. 3 is a detailed flowchart provided by embodiment 1 of the present invention;
FIG. 4 is a block diagram of an apparatus provided by embodiment 1 of the present invention;
FIG. 5 is an abstract flowchart provided by embodiment 1 of the present invention;
FIG. 6 is a detailed flowchart provided by embodiment 1 of the present invention;
FIG. 7 is a block diagram of an apparatus provided by embodiment 2 of the present invention.

### PREFERRED EMBODIMENTS OF THE PRESENT INVENTION

The technical solution in the embodiments of the present invention will be described clearly and completely accompanying with drawings of embodiments of the present invention as follows. Apparently, the described embodiments are only a part of the embodiments of the present invention, but not all the embodiments. Based on the embodiments of the present invention, all other embodiments achieved by those ordinarily skilled in the art without doing any creative work, should be included in the scope of the present invention.

The embodiments of the present invention will be further described in detail accompanying with drawings as follows.

The method and apparatus for file encryption, and the method and apparatus for file decryption provided by the present invention are based on Windows virtual disk. The socalled virtual disk is substantially similar to the known physical disk, which refers to volumes in Windows and corresponds to at least one device.

Before describing the method and apparatus for file encryption, and the method and apparatus for file decryption, how to create the virtual disk is firstly described:

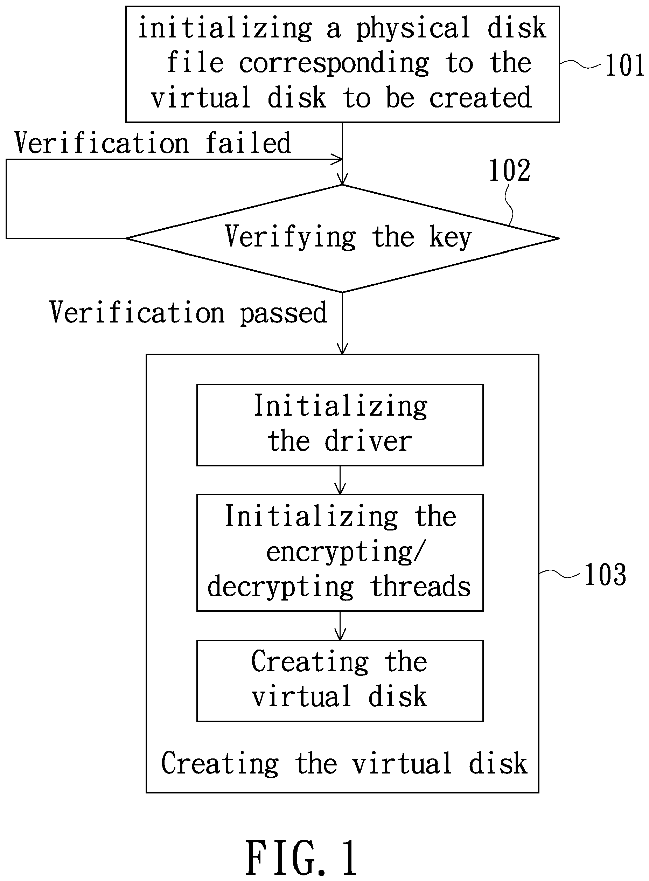

Referring to FIG. 1, FIG. 1 is a flow chart of a method for creating virtual disk provided by an embodiment of the present invention. As shown in FIG. 1, the flow may include the following steps:

Step 101, initializing a physical disk file corresponding to the virtual disk to be created.

In step 101, the physical disk file corresponding to the virtual disk may be pre-configured manually, and the file may have a suffix of ".qbox". The physical disk file is used to store the data written into the virtual disk. That is, when writing data into the virtual disk, it is necessary to redirect the data to the physical disk file. When sending a reading request to the virtual disk for reading the data, it is necessary to redirect the reading request to the physical disk file for reading the data required by the reading request.

Step 102, when creating the virtual disk, requesting the user to provide a key for using the physical disk file and verifying the key provided by the user. If the verification is passed, a step 103 should be executed. Otherwise, return to step 102 or end the current flow.

Step 103, creating the virtual disk.

In an implemention example, the step 103 may include the following steps:
Step 1, initializing the driver run in the kernel, so that the driver serves as a driver of the virtual disk in the following process. The driver processes the reading and writing requests to the virtual disk. Here, the driver may be a kind of executable file of Windows and has a suffix of ".sys".
Step 2, initializing kernel encrypting/decrypting threads.

Here, a thread is a basic unit of Windows task scheduling, the kernel encrypting thread is the thread that run in the system kernel space and used to encrypt, and the kernel decrypting thread is the thread that run in the system kernel space and used to decrypt.

It is to be noted that step 1 and step 2 are only an example of the initialization process for creating the virtual disk in Windows. In other Windows environments, the initialization processes for creating the virtual disk are different, and the present invention is not limited to the example.

Step 3, creating the virtual disk using a control for creating virtual disks.

In an example, the control used to create virtual disks in step 3 is the IoCteateDevice control of Windows.

Additionally, the virtual disk created in step 3 has a unique identifier, such as \Device\HaarddiskVolume2, and also has a corresponding device type, for example, FILE_DEVICE_DISK, which represents a disk device.

Thus, by above steps 1 to 3, the operation of creating the virtual disk in step 103 is achieved.

Preferably, in the present invention, to make the virtual disk is visible in a user mode, the virtual disk can be assigned with a driver letter using a driver letter assigning control such as the "IoCreateSymbolicLink" control in Windows. Furthermore, in order to make the assigned driver letter can be seen in the "My Computer" view of Windows, it is necessary to establish a driver letter connection for the device.

At this point, the main steps for creating the virtual disk are already executed. However, considering the plug-and-play feature of the virtual disk provided by the present invention, it is necessary to notify the virtual disk to a disk management module of Windows (MountManger); and/or notify a resource management module (explorer) using broadcasting message so that the explorer re-enumerates the virtual disk.

So, the user is able to perform the reading and writing operations to the virtual disk in a similar way to the physical disk, but the virtual disk would redirect the reading/writing requests to the corresponding physical disk file when performing the reading/writing operations. The detail process is described in the following embodiment 1 and embodiment 2.

### Embodiment 1:

This embodiment describes a file encrypting method based on the above virtual disk.

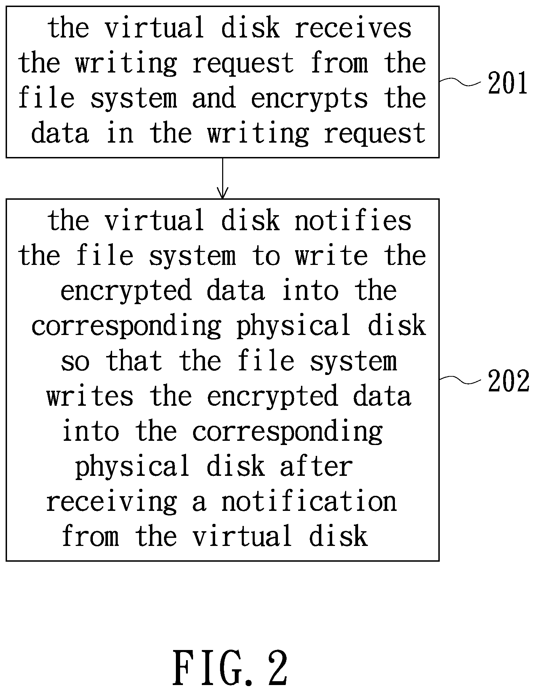

Referring to FIG. 2, FIG. 2 is an abstract flowchart of embodiment 1. As shown in FIG. 2, the flow may include the following steps:
Step 201, the virtual disk receives the writing request from the file system and encrypts the data in the writing request.
Step 202, the virtual disk notifies the file system to write the encrypted data into the corresponding physical disk so that the file system writes the encrypted data into the corresponding physical disk after receiving a notification from the virtual disk.

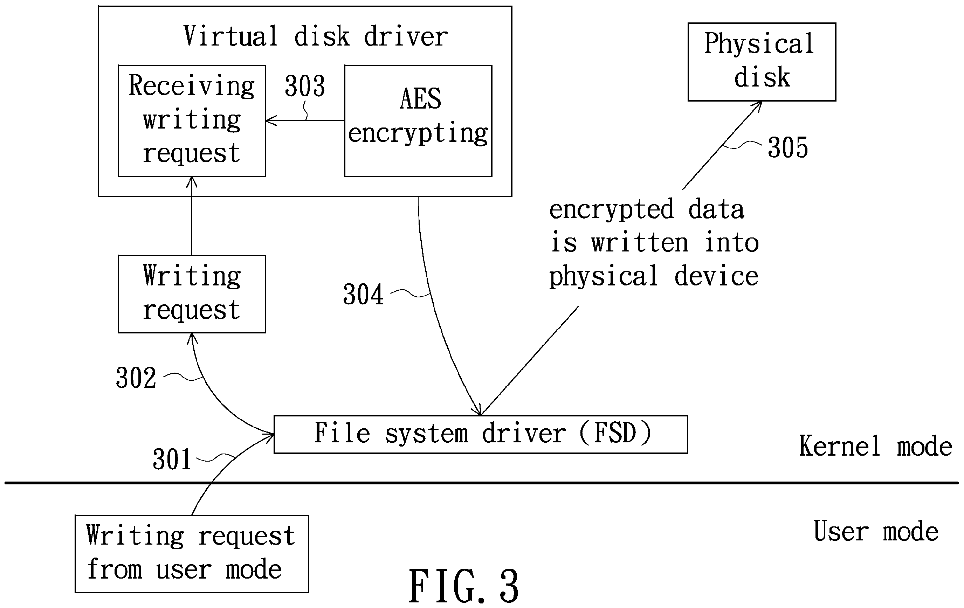

To illustrate the flow shown in FIG. 2 more clearly, the flow is further explained in detail with reference to FIG. 3.

Referring to FIG. 3, FIG. 3 is a detailed flowchart illustrating the flow of embodiment 1. As shown in FIG. 3, the flow may include the following steps:
Step 301, a user launches a writing request, using a control for launching writing requests such as WriteFile, in a user mode.

The writing request includes an identifier of the virtual disk and the data to be written into the virtual disk.

The user mode indicates that the writing request launched in step 301 is executed in a user space.

Step 302, the file system, in a kernel mode, receives the writing request from the user mode, if the writing request includes the identifier of the virtual disk; the file system sends the writing request to the virtual disk.

Specifically, the file system in embodiment 1 may be a file system driver (FSD) or other modules having similar functions.

The kernel mode indicates that, in step 302, the writing request is received by the file system in a kernel space.

Step 303, the virtual disk receives the writing request from the file system and encrypts the data in the writing request.

Step 303 is performed by the driver of the virtual disk.

Additionally, under Windows system, reading/writing operations of disks are performed in the unit of clusters. The size of a cluster is greater than 512 bytes and less than 64k bytes, and values the N^{th} power of 2. The default cluster size of the NTFS file system of Windows is 4096 bytes, and the default cluster size of the FAT32 file system is 512 bytes. Due to this feature of disks, it is easily to encrypt data using the mainstream encrypting algorithms.

Currently, the mainstream encrypting algorithms include the stream encrypting algorithm and the block encrypting algorithm. Compared with the stream encrypting algorithm, the block encrypting algorithm has minimum encryption length and alignment requirements. The minimum encryption length is generally N^{th} power of 2, i.e. 8, 16 or 32 bytes. In this way, the boundaries of the minimum reading/writing unit of disks are aligned exactly and it is not necessary to fill invalid data to use block encryption. Generally, transparent file encryption needs to fill invalid data for using block encryption algorithm. Preferably, considering the data security, block encryption algorithm that has high level security, such as AES encryption algorithm, is used to encrypt data in the present embodiment.

Step 304, the virtual disk ascertains the physical disk file corresponding to the virtual disk itself, then the virtual disk replaces the identifier of the virtual disk in the writing request with the identifier of the physical disk file, then the virtual disk sends the writing request to the file system.

The ascertained physical disk file in step 304 is the initialized file in step 101.

Additionally, step 304, for example, is executed by the driver of the virtual disk. The step of sending the writing request to the file system is executed by the driver of the virtual disk using a control for sending writing requests such as ZWWriteFile.

Step 305, the file system receives the writing request from the virtual disk, and then the file system writes the encrypted data in the writing request into the physical disk file, which is specified by the file identifier in the writing request.

Then, the flow shown in FIG. 3 is completed.

As the virtual disk is visible only in the kernel mode, the embodiment 1 utilizes the virtual disk in the kernel mode to encrypt data and the virtual disk is invisible for the user in the user mode. Thus, even if the user logs into the Windows, the data in the virtual disk can't be read and a reliable data encrypting method is achieved.

Additionally, in the embodiment 1, the method only uses the virtual disk to encrypt data and the virtual disk does not affect the general reading/writing performance. Thus, the method barely affects performance of the operating system.

Here, the method provided in the embodiment 1 is described as above. Corresponding to the method provided in the embodiment 1, a file encrypting apparatus is further provided.

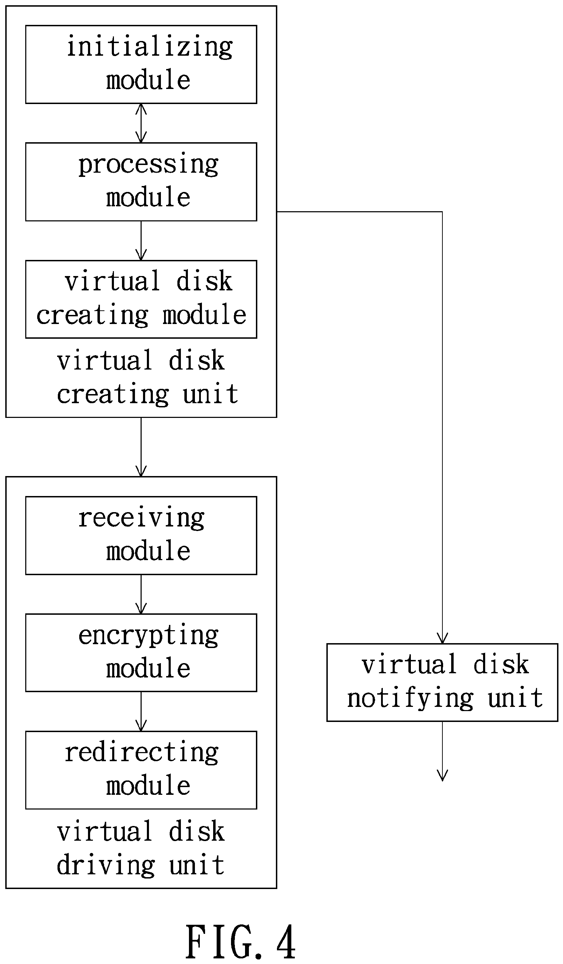

Referring to FIG. 4, FIG. 4 is a block diagram of a file encrypting apparatus provided in the embodiment 1. As shown in FIG. 4, the apparatus includes a virtual disk creating unit and a virtual disk driving unit.

The virtual disk creating unit is configured for creating a virtual disk.

The virtual disk driving unit is configured for receiving a writing request from a file system, encrypting data in the writing request, and notifying the file system to write the encrypted data into a corresponding physical disk so that the file system writes the encrypted data into the corresponding physical disk after receiving the notification from the virtual disk.

The virtual disk is visible in the kernel mode and has a unique identifier. Preferably, as shown in FIG.4, the apparatus further includes a virtual disk notifying unit.

The virtual disk notifying unit is configured for notifying the virtual disk to a disk management module of Windows, after the virtual disk creating unit creating the virtual disk and before the virtual disk driving unit receiving the writing request; and/or notifying a resource management module of Windows using broadcasting message such that the resource management module re-enumerates the virtual disk.

In the embodiment 1, the virtual disk driving unit includes a receiving module, an encrypting module and a redirecting module.

The receiving module is configured for receiving the writing request from the file system.

The encrypting module is configured for encrypting the data in the writing request.

The redirecting module is configured for ascertains the physical disk file corresponding to the virtual disk, replacing the identifier of the virtual disk in the writing request with the identifier of the physical disk file, and then sending the writing request to the file system. As a result, the file system writes the encrypted data in the writing request into the physical disk file corresponding to the identifier in the writing request, after receiving the writing request from the virtual disk.

In this embodiment, the virtual disk creating unit includes an initializing module, a processing module and a virtual disk creating module.

The initializing module is configured for initializing the physical disk file corresponding to the virtual disk.

The processing module is configured for requesting the user to provide a key for using the physical disk file and verifying the key provided by the user when the virtual disk creating module is triggered to create the virtual disk. If the verification is passed, the initializing module triggers the initializing module to proceed with the initialization that is required to create the virtual disk, and triggers the virtual disk creating module to create the virtual disk after detecting that the initializing module finished the initialization process.

The virtual disk creating module is configured for creating the virtual disk when triggered by the processing module.

The apparatus provided in the embodiment 1 is described as above.

An embodiment 2 is described as follows.

### Embodiment 2:

The embodiment 2 describes a file decrypting method based on the virtual disk described above.

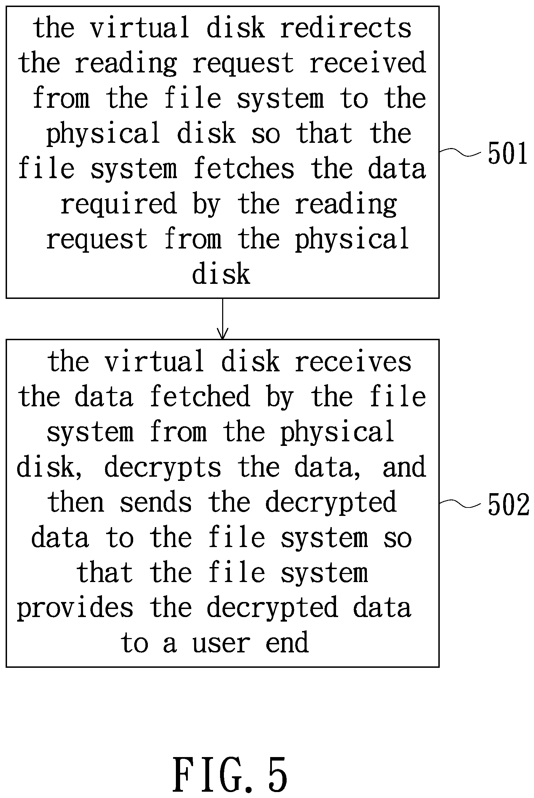

Referring to FIG. 5, FIG. 5 is an abstract flowchart of the embodiment 2 according to this invention. As shown in FIG. 5, the flow includes the following steps.

Step 501, the virtual disk redirects the reading request received from the file system to the physical disk so that the file system fetches the data required by the reading request from the physical disk.

Step 502, the virtual disk receives the data fetched by the file system from the physical disk, decrypts the data, and then sends the decrypted data to the file system. The file system provides the decrypted data to a user end.

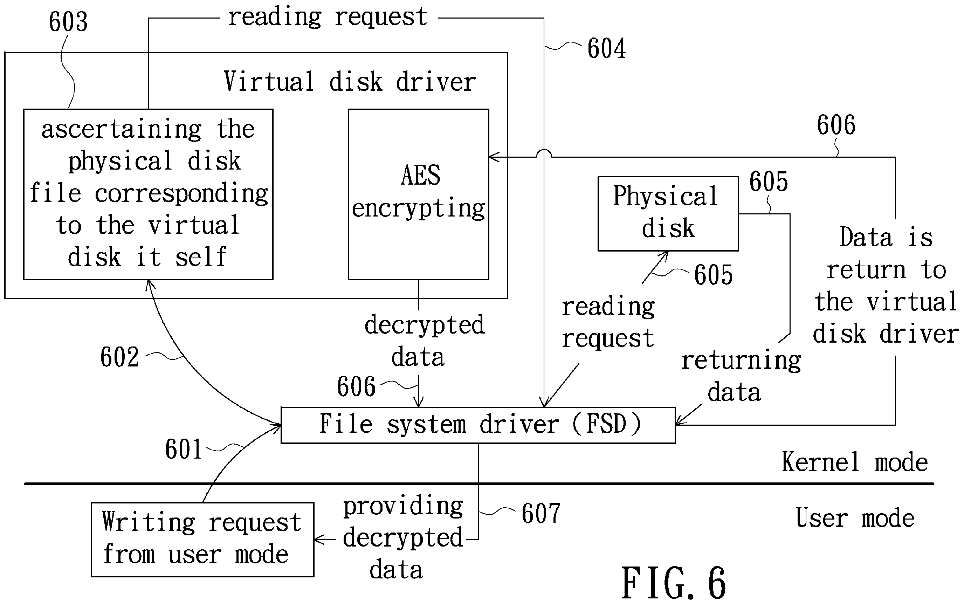

To illustrate the flow shown in FIG. 5 more clearing, the flow shown in FIG.5 is described in detail with the reference to FIG. 6.

Referring to FIG. 6, FIG. 6 is a detailed flowchart of the embodiment 2 according to this invention. As shown in FIG. 6, the flow includes the following steps.

Step 601, a user launches a reading request, using a control for launching reading requests such as ReadFile, in a user mode.

The reading request includes an identifier of the virtual disk.

Step 602, the file system, in a kernel mode, receives the reading request from the user mode, if the reading request includes the identifier of the virtual disk; the file system sends the reading request to the virtual disk.

Specifically, the file system in the embodiment 2 may be a FSD or other modules having similar functions.

Step 603, the virtual disk ascertains the physical disk file corresponding to the virtual disk itself after receiving the reading request from the file system.

The ascertained physical disk file in step 603 is the initialized file as described in step 101.

Additionally, step 603 is executed by the driver of the virtual disk.

Step 604, the virtual disk replaces the identifier of the virtual disk in the reading request with the identifier of the physical disk file in the reading request, and then sends the reading request to the file system.

The reading request in step 604 may be send by the driver of the virtual disk using a control for sending reading requests such as ZWReadFile.

Step 605, the file system sends the reading request to the physical disk file corresponding to the identifier in the reading request, after receiving the reading request form the virtual disk. The reading request is send for fetching data required by the reading request from the physical disk file.

According to the description of embodiment 1, in step 605, the data fetched by the file system is encrypted data.

Step 606 the virtual disk receives the data fetched by the file system from the physical disk, decrypts the data, and then sends the decrypted data to the file system.

The decrypting algorithm used in step 606 is matched to the encrypting algorithm in the embodiment 1. For example, the decrypting algorithm may also be an AES decrypting algorithm that has a high level of security.

Step 607, the file system provides the decrypted data to a user end.

The flow shown in FIG. 6 is described as above.

It is to be noted, for those ordinarily skilled in the art, the whole or part of the steps in the above methods can be achieved by instructing hardware to perform with computer programs. The computer programs can be stored in a computer readable medium. When the programs are executed, the flow of the method is above embodiments are performed. The storage medium may be a hard disk, a compact disk, a read-only memory (ROM) or a random access memory (RAM), etc.

A file decrypting apparatus provided in the embodiment 2 is described as follows.

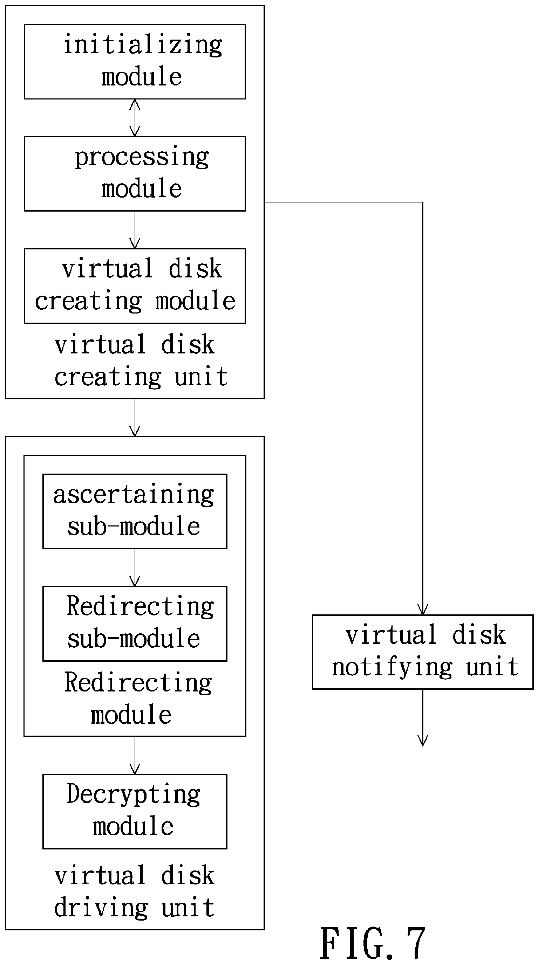

Referring to FIG. 7, FIG. 7 is a block diagram of the embodiment 2 of this invention. As shown in FIG. 7, the apparatus includes a virtual disk creating unit and a virtual disk driving unit.

The virtual disk creating unit is configured for creating the virtual disk.

The virtual disk driving unit includes a redirecting module and a decrypting module.

The redirecting module is configured for redirecting a reading request sent from a file system to a physical disk, so that the file system fetches data required by the reading request from the physical disk.

The decrypting module is configured for receiving the data fetched by the file system from the physical disk, decrypting the received data and sending the decrypted data to the file system. As such, the file system may provide the decrypted data to a user end.

The virtual disk is visible in the kernel mode and has a unique identifier. As shown in FIG. 7, the apparatus further includes a virtual disk notifying unit.

The virtual disk notifying unit is configured for notifying the virtual disk to a disk management module of Windows, after the virtual disk creating unit creating the virtual disk and before the virtual disk driving unit receiving the reading request; and/or notifying a resource management module of Windows using broadcasting message such that the resource management module re-enumerates the virtual disk.

Preferably, as shown in FIG. 7, the redirecting module further includes an ascertaining sub-module and a redirecting sub-module.

The detecting sub-module is configured for ascertaining the physical disk file corresponding to the detecting sub-module itself after receiving the reading request.

The redirecting sub-module is configured for replacing the identifier of the virtual disk in the reading request with the identifier of the ascertained physical disk file, and then sending the reading request to the file system. The file system receives the reading request from the virtual disk, and then sends the reading request to the physical disk file corresponding to the identifier in the reading request for fetching data required by the reading request.

In this embodiment, the virtual disk creating unit includes an initializing module, a processing module and a virtual disk creating module.

The initializing module is configured for initializing the physical disk file corresponding to the virtual disk.

The processing module is configured for requesting the user to provide a key for using the physical disk file and verifying the key provided by the user when the virtual disk is triggered to create the virtual disk. If the verification is passed, the initializing module triggers the initializing module to proceed with the initialization that is required to create the virtual disk, and triggers the virtual disk creating module to create the virtual disk after detecting that the initializing module finished the initialization process.

The virtual disk creating module is configured for creating the virtual disk when triggered by the processing module.

The apparatus in the embodiment 2 is described as above.

As shown in the technical solutions described above, in this invention, the virtual disk is used to encrypt the data in the writing request and to decrypt the data in the reading request. That improves reliability, security and effectiveness of file encryption.

The contents described above are only preferred embodiments of the present invention, but the scope of the present invention is not limited to the embodiments. Any ordinarily skilled in the art would make any modifications or replacements to the embodiments in the scope of the present invention, and these modifications or replacements should be included in the scope of the present invention. Thus, the scope of the present invention should be subjected to the claims.

### INDUSTRIAL PRACTICALITY

The file encrypting/decrypting methods and apparatus of this invention use the virtual disk to encrypt the data in the writing request and decrypt the data in the reading request. That improves reliability, security and effectiveness of file encryption.

## Claims

1. A file encrypting method, comprising a step of creating a virtual disk, the virtual disk being visible in a kernel mode and having an identifier, the virtual disk referring to volumes in an operating system and corresponding to at least one device, the method further comprising:
receiving, in the virtual disk, a writing request from a file system;
encrypting, by the virtual disk, data in the writing request; and
notifying, by the virtual disk, the file system to write the encrypted data into a corresponding physical disk, so that the file system writes the encrypted data into the corresponding physical disk after receiving a notification from the virtual disk;
wherein the virtual disk is visible only in the kernel mode and is invisible for a user in a user mode, wherein the user mode indicates that launching of the writing request is executed in a user space;
after creating the virtual disk and before the virtual disk receiving the writing request from the file system, the method further comprising:
notifying the virtual disk to a disk management module of the operating system; and/or
notifying the virtual disk to a resource management module of the operating system using a broadcasting message thereby notifying the resource management module to re-enumerate the virtual disk;
wherein the step of creating the virtual disk comprises:
initializing a physical disk file corresponding to the virtual disk;
requesting a user to provide a key for using the physical disk file;
verifying the key provided by the user;
executing the initializing process required for creating the virtual disk if verification has passed; and
creating the virtual disk using a control for creating virtual disk after finishing the initialization process.

2. The file encrypting method according to claim 1, wherein the file system sends the writing request to the virtual disk by steps of:
the file system receiving, in the kernel mode, the writing request from the user mode;
if the writing request includes the identifier of the virtual disk, the file system sending the writing request to the virtual disk.

3. The file encrypting method according to claim 1, wherein the step of notifying the file system to write the encrypted data into a corresponding physical disk comprises:
ascertaining a physical disk file corresponding to the virtual disk itself;
replacing the identifier of the virtual disk in the writing request with the identifier the physical disk file; and
sending the writing request to the file system;
wherein the step of the file system writes the encrypted data into the corresponding physical disk after receiving a notification from the virtual disk comprises: the file system writing the encrypted data in the writing request into a physical disk file corresponding to the identifier in the writing request after receiving the writing request from the virtual disk.

4. A file decrypting method, comprising a step of creating a virtual disk, the virtual disk being visible in a kernel mode and having an identifier, the virtual disk referring to volumes in an operating system and corresponding to at least one device, the method further comprising:
A, the virtual disk redirecting a reading request, which is received from a file system, to a physical disk so that the file system fetches data required by the reading request from the physical disk;
B, the virtual disk receiving the data fetched by the file system from the physical disk, decrypting the received data, and sending the decrypted data to the file system so that the file system provides the decrypted data to a user end;
wherein the virtual disk is visible only in the kernel mode and is invisible for a user in a user mode;
after creating the virtual disk and before performing the step A, the method further comprising:
notifying the virtual disk to a disk management module of the operating system; and/or
notifying the virtual disk to a resource management module of the operating system using a broadcasting message thereby notifying the resource management module to re-enumerate the virtual disk;
wherein the step of creating the virtual disk comprises:
initializing a physical disk file corresponding to the virtual disk;
requesting a user to provide a key for using the physical disk file;
verifying the key provided by the user;
executing the initializing process required for creating the virtual disk if verification has passed; and
creating the virtual disk using a control for creating virtual disk after finishing the initialization process.

5. The file decrypting method according to claim 4, wherein in the step A, the file system sends the reading request to the virtual disk by steps of:
the file system receiving, in the kernel mode, the reading request from the user mode;
if the reading request includes the identifier of the virtual disk, the file system sending the reading request to the virtual disk.

6. The file decrypting method according to claim 4, wherein the step A comprises:
ascertaining a physical disk file corresponding to the virtual disk itself;
replacing the identifier of the virtual disk in the reading request with the identifier of the physical disk file; and
sending the reading request to the file system;
the file system sending the reading request to the physical disk file corresponding to the identifier in the reading request, after receiving the reading request from the virtual disk, for fetching data required by the reading request from the physical disk file.

7. A file encrypting apparatus, comprising:
a virtual disk creating unit configured for creating a virtual disk, the virtual disk being visible in a kernel mode and having an identifier, the virtual disk referring to volumes in an operating system and corresponding to at least one device;
a virtual disk driving unit configured for:
receiving a writing request from a file system,
encrypting data in the writing request, and notifying the file system to write the encrypted data into a corresponding physical disk;
wherein the file system writes the encrypted data into the corresponding physical disk after receiving a notification from the virtual disk;
wherein the virtual disk is visible only in the kernel mode and is invisible for a user in a user mode, wherein the user mode indicates that launching of the writing request is executed in a user space;
a virtual disk notifying unit configured for notifying the virtual disk to a disk management module of the operating system, after creating the virtual disk and before the virtual disk receiving the writing request from the file system; and/or notifying the virtual disk to a resource management module of the operating system using a broadcasting message thereby notifying the resource management module to re-enumerate the virtual disk;
wherein the virtual disk creating unit comprises: an initializing module, a processing module and a virtual disk creating module, wherein:
the initializing module is configured for initializing a physical disk file corresponding to the virtual disk;
the processing module is configured for requesting the user to provide a key for using the physical disk, verifying the key provided by the user, triggering the initializing module to proceed with the initialization process that is required to create the virtual disk if the verification having passed, and triggering the virtual disk creating module to create the virtual disk after the initializing module finishing the initialization process.
the virtual disk creating module is configured for creating the virtual disk when triggered by the processing module.

8. The file encrypting apparatus according to claim 7, wherein the virtual disk driving unit comprising:
a receiving module, configured for receiving the writing request from the file system;
an encrypting module, configured for encrypting the data in the writing request;
a redirecting module, configured for: ascertaining a physical disk file corresponding to the virtual disk itself; replacing the identifier of the virtual disk in the writing request with the identifier the physical disk file; and sending the writing request to the file system;
wherein the file system writes the encrypted data in the writing request into the physical disk file corresponding to the identifier in the writing request after receiving the writing request from the virtual disk.

9. A file decrypting apparatus, comprising:
a virtual disk creating unit, configured for creating a virtual disk, the virtual disk being visible in a kernel mode and having an identifier, the virtual disk referring to volumes in an operating system and corresponding to at least one device;
a virtual disk driving unit, comprising a redirecting module and a decrypting module; wherein
the redirecting module is configured for redirecting a reading request received from a file system to a physical disk, so that the file system fetches data required by the reading request from the physical disk; and
the decrypting module is configured for receiving the data fetched by the file system from the physical disk, decrypting the received data and sending the decrypted data to the file system so that the file system may provide the decrypted data to a user end;
wherein the virtual disk is visible only in the kernel mode and is invisible for a user in a user mode;
a virtual disk notifying unit configured for notifying the virtual disk to a disk management module of the operating system, after creating the virtual disk and before the virtual disk receiving the writing request from the file system; and/or notifying the virtual disk to a resource management module of the operating system using a broadcasting message thereby notifying the resource management module to re-enumerate the virtual disk;
wherein the virtual disk creating unit comprises: an initializing module, a processing module and a virtual disk creating module, wherein:
the initializing module is configured for initializing a physical disk file corresponding to the virtual disk;
the processing module is configured for requesting the user to provide a key for using the physical disk, verifying the key provided by the user, triggering the initializing module to proceed with the initialization process that is required to create the virtual disk if the verification having passed, and triggering the virtual disk creating module to create the virtual disk after the initializing module finishing the initialization process.
the virtual disk creating module is configured for creating the virtual disk when triggered by the processing module.

## Patentansprüche

1. Dateiverschlüsselungsverfahren, umfassend einen Schritt des Anlegens eines virtuellen Laufwerks, wobei das virtuelle Laufwerk in einem Kernel-Modus sichtbar ist und eine Kennung aufweist, wobei sich das virtuelle Laufwerk auf Volumen in einem Betriebssystem bezieht und mindestens einer Einrichtung entspricht, wobei das Verfahren weiter umfasst:
Empfangen, in dem virtuellen Laufwerk, einer Schreibaufforderung von einem Dateisystem;
Verschlüsseln, durch das virtuelle Laufwerk, von Daten in der Schreibaufforderung; und
Benachrichtigen, durch das virtuelle Laufwerk, des Dateisystems zum Schreiben der verschlüsselten Daten in ein entsprechendes physisches Laufwerk, so dass das Dateisystem die verschlüsselten Daten nach dem Empfangen einer Benachrichtigung von dem virtuellen Laufwerk in das entsprechende physische Laufwerk schreibt;
wobei das virtuelle Laufwerk nur in dem Kernel-Modus sichtbar ist und einem Benutzer in einem Benutzermodus unsichtbar ist, wobei der Benutzermodus anzeigt, dass das Starten der Schreibaufforderung in einem Benutzerraum ausgeführt wird;
nach dem Anlegen des virtuellen Laufwerks und bevor das virtuelle Laufwerk die Schreibaufforderung von dem Dateisystem empfängt, das Verfahren weiter umfasst:
Melden des virtuellen Laufwerks an ein Laufwerksverwaltungsmodul des Betriebssystems; und/oder
Melden des virtuellen Laufwerks an ein Ressourcenverwaltungsmodul des Betriebssystems unter Verwendung einer Rundsendenachricht, wodurch das Ressourcenverwaltungsmodul benachrichtigt wird, das virtuelle Laufwerk neu zu benennen;
wobei der Schritt des Anlegens eines virtuellen Laufwerks umfasst:
Initialisieren einer physischen Laufwerksdatei entsprechend dem virtuellen Laufwerk;
Auffordern, dass ein Benutzer einen Schlüssel zum Verwenden der physischen Laufwerksdatei liefert;
Verifizieren des durch den Benutzer gelieferten Schlüssels;
Ausführen des zum Anlegen des virtuellen Laufwerks erforderlichen Initialisierungsprozesses, falls die Verifikation erfolgreich war; und
Anlegen des virtuellen Laufwerks unter Verwendung einer Steuerung zum Anlegen eines virtuellen Laufwerks nach dem Beenden des Initialisierungsprozesses.

2. Dateiverschlüsselungsverfahren nach Anspruch 1, wobei das Dateisystem die Schreibaufforderung an das virtuelle Laufwerk sendet durch die folgenden Schritte:
das Dateisystem empfängt, in dem Kernel-Modus, die Schreibaufforderung von dem Benutzermodus;
falls die Schreibaufforderung die Kennung des virtuellen Laufwerks enthält, sendet das Dateisystem die Schreibaufforderung an das virtuelle Laufwerk.

3. Dateiverschlüsselungsverfahren nach Anspruch 1, wobei der Schritt des Benachrichtigens des Dateisystems, die verschlüsselten Daten in ein entsprechendes physisches Laufwerk zu schreiben, umfasst:
Ermitteln einer physischen Laufwerksdatei entsprechend dem virtuellen Laufwerk selbst;
Ersetzen der Kennung des virtuellen Laufwerks in der Schreibaufforderung durch die Kennung der physischen Laufwerksdatei; und
Senden der Schreibaufforderung an das Dateisystem;
wobei der Schritt des Dateisystems die verschlüsselten Daten in das entsprechende physische Laufwerk schreibt nach dem Empfangen einer Benachrichtigung von dem virtuellen Laufwerk umfasst:
das Dateisystem schreibt die verschlüsselten Daten in der Schreibaufforderung in eine physische Laufwerksdatei entsprechend der Kennung in der Schreibaufforderung nach dem Empfangen der Schreibaufforderung von dem virtuellen Laufwerk.

4. Dateiverschlüsselungsverfahren, umfassend einen Schritt des Anlegens eines virtuellen Laufwerks, wobei das virtuelle Laufwerk in einem Kernel-Modus sichtbar ist und eine Kennung aufweist, wobei sich das virtuelle Laufwerk auf Volumen in einem Betriebssystem bezieht und mindestens einer Einrichtung entspricht, wobei das Verfahren weiter umfasst:
A, das virtuelle Laufwerk leitet eine Leseaufforderung, die von einem Dateisystem empfangen wird, an ein physisches Laufwerk um, so dass das Dateisystem durch die Leseaufforderung erforderliche Daten von dem physischen Laufwerk holt;
B, das virtuelle Laufwerk empfängt die durch das Dateisystem von dem physischen Laufwerk geholten Daten, entschlüsselt die empfangenen Daten und sendet die entschlüsselten Daten an das Dateisystem, so dass das Dateisystem die entschlüsselten Daten an ein Benutzerende liefert;
wobei das virtuelle Laufwerk nur in dem Kernel-Modus sichtbar ist und für einen Benutzer in einem Benutzermodus unsichtbar ist;
nach dem Anlegen des virtuellen Laufwerks und vor dem Durchführen des Schritts A, das Verfahren weiter umfasst:
Melden des virtuellen Laufwerks an ein Laufwerksverwaltungsmodul des Betriebssystems; und/oder
Melden des virtuellen Laufwerks an ein Ressourcenverwaltungsmodul des Betriebssystems unter Verwendung einer Rundsendenachricht, wodurch das Ressourcenverwaltungsmodul benachrichtigt wird, das virtuelle Laufwerk neu zu benennen;
wobei der Schritt des Anlegens eines virtuellen Laufwerks umfasst:
Initialisieren einer physischen Laufwerksdatei entsprechend dem virtuellen Laufwerk;
Auffordern, dass ein Benutzer einen Schlüssel zum Verwenden der physischen Laufwerksdatei liefert;
Verifizieren des durch den Benutzer gelieferten Schlüssels;
Ausführen des zum Anlegen des virtuellen Laufwerks erforderlichen Initialisierungsprozesses, falls die Verifikation erfolgreich war; und
Anlegen des virtuellen Laufwerks unter Verwendung einer Steuerung zum Anlegen eines virtuellen Laufwerks nach dem Beenden des Initialisierungsprozesses.

5. Dateientschlüsselungsverfahren nach Anspruch 4, wobei in dem Schritt A das Dateisystem die Leseaufforderung an das virtuelle Laufwerk schickt durch die folgenden Schritte:
das Dateisystem empfängt, in dem Kernel-Modus, die Leseaufforderung von dem Benutzermodus;
falls die Leseaufforderung die Kennung des virtuellen Laufwerks enthält, sendet das Dateisystem die Leseaufforderung an das virtuelle Laufwerk.

6. Dateientschlüsselungsverfahren nach Anspruch 4, wobei der Schritt A umfasst:
Ermitteln einer physischen Laufwerksdatei entsprechend dem virtuellen Laufwerk selbst;
Ersetzen der Kennung des virtuellen Laufwerks in der Leseaufforderung durch die Kennung der physischen Laufwerksdatei; und
Senden der Leseaufforderung an das Dateisystem;
das Dateisystem sendet die Leseaufforderung an die physische Laufwerksdatei entsprechend der Kennung in der Leseaufforderung, nach Empfangen der Leseaufforderung von dem virtuellen Laufwerk, zum Holen von durch die Leseaufforderung erforderlichen Daten von der physischen Laufwerksdatei.

7. Dateiverschlüsselungsvorrichtung, umfassend:
eine Virtuelle-Laufwerk-Anlegeeinheit konfiguriert zum Anlegen eines virtuellen Laufwerks, wobei das virtuelle Laufwerk in einem Kernel-Modus sichtbar ist und eine Kennung aufweist, wobei sich das virtuelle Laufwerk auf Volumen in einem Betriebssystem bezieht und entsprechend mindestens einer Einrichtung;
eine Virtuelle-Laufwerk-Ansteuereinheit konfiguriert zum:
Empfangen einer Schreibaufforderung von einem Dateisystem,
Verschlüsseln von Daten in der Schreibaufforderung und Benachrichtigen des Dateisystems zum Schreiben der verschlüsselten Daten in ein entsprechendes physisches Laufwerk;
wobei das Dateisystem die verschlüsselten Daten in das entsprechende physische Laufwerk schreibt nach Empfangen einer Benachrichtigung von dem virtuellen Laufwerk;
wobei das virtuelle Laufwerk nur in dem Kernel-Modus sichtbar ist und einem Benutzer in einem Benutzermodus unsichtbar ist, wobei der Benutzermodus anzeigt, dass das Starten der Schreibaufforderung in einem Benutzerraum ausgeführt wird;
eine Virtuelle-Laufwerk-Meldeeinheit konfiguriert zum Melden des virtuellen Laufwerks an ein Laufwerksverwaltungsmodul des Betriebssystems, nach dem Anlegen des virtuellen Laufwerks und bevor das virtuelle Laufwerk die Schreibaufforderung von dem Dateisystem empfängt; und/oder
Melden des virtuellen Laufwerks an ein Ressourcenverwaltungsmodul des Betriebssystems unter Verwendung einer Rundsendenachricht, wodurch das Ressourcenverwaltungsmodul benachrichtigt wird, das virtuelle Laufwerk neu zu benennen;
wobei die Virtuelle-Laufwerk-Anlegeeinheit umfasst: ein Initialisierungsmodul, ein Verarbeitungsmodul und ein Virtuelle-Laufwerk-Anlegemodul, wobei:
das Initialisierungsmodul konfiguriert ist zum Initialisieren einer physischen Laufwerksdatei entsprechend dem virtuellen Laufwerk;
das Verarbeitungsmodul konfiguriert ist zum Auffordern des Benutzers zum Liefern eines Schlüssels zum Verwenden des physischen Laufwerks, Verifizieren des durch den Benutzer gelieferten Schlüssels, Auslösen des Initialisierungsmoduls zum Vorgehen mit dem Initialisierungsprozess, der erforderlich ist, um das virtuelle Laufwerk anzulegen, nachdem die Verifikation erfolgreich gewesen ist, und Auslösen des Virtuelle-Laufwerk-Anlegemoduls zum Anlegen des virtuellen Laufwerks, nachdem das Initialisierungsmodul den Initialisierungsprozess beendet hat,
das Virtuelle-Laufwerk-Anlegemodul konfiguriert ist zum Anlegen des virtuellen Laufwerks, wenn durch das Verarbeitungsmodul ausgelöst.

8. Dateiverschlüsselungsvorrichtung nach Anspruch 7, wobei die Virtuelle-Laufwerk-Ansteuereinheit umfasst:
ein Empfangsmodul, konfiguriert zum Empfangen der Schreibaufforderung von dem Dateisystem;
ein Verschlüsselungsmodul, konfiguriert zum Verschlüsseln von Daten in der Schreibaufforderung;
ein Umleitungsmodul, konfiguriert zum: Ermitteln einer physischen Laufwerksdatei entsprechend dem virtuellen Laufwerk selbst; Ersetzen der Kennung des virtuellen Laufwerks in der Schreibaufforderung durch die Kennung der physischen Laufwerksdatei; und Senden der Schreibaufforderung an das Dateisystem;
wobei das Dateisystem die verschlüsselten Daten in der Schreibaufforderung in die physische Laufwerksdatei entsprechend der Kennung in der Schreibaufforderung nach dem Empfangen der Schreibaufforderung von dem virtuellen Laufwerk schreibt.

9. Dateientschlüsselungsvorrichtung, umfassend:
eine Virtuelle-Laufwerk-Anlegeeinheit konfiguriert zum Anlegen eines virtuellen Laufwerks, wobei das virtuelle Laufwerk in einem Kernel-Modus sichtbar ist und eine Kennung aufweist, wobei sich das virtuelle Laufwerk auf Volumen in einem Betriebssystem bezieht und entsprechend mindestens einer Einrichtung;
eine Virtuelle-Laufwerk-Ansteuereinheit, umfassend ein Umleitungsmodul und ein Entschlüsselungsmodul, wobei
das Umleitungsmodul konfiguriert ist zum Umleiten einer von einem Dateisystem empfangenen Leseaufforderung zu einem physischen Laufwerk, so dass das Dateisystem durch die Leseaufforderung erforderliche Daten von dem physischen Laufwerk holt; und
das Entschlüsselungsmodul konfiguriert ist zum Empfangen der durch das Dateisystem von dem physischen Laufwerk geholten Daten, Entschlüsseln der empfangenen Daten und Senden der entschlüsselten Daten an das Dateisystem, so dass das Dateisystem die entschlüsselten Daten an ein Benutzerende liefern kann;
wobei das virtuelle Laufwerk nur in dem Kernel-Modus sichtbar ist und für einen Benutzer in einem Benutzermodus unsichtbar ist;
eine Virtuelle-Laufwerk-Meldeeinheit, die konfiguriert ist zum Melden des virtuellen Laufwerks an ein Laufwerksverwaltungsmodul des Betriebssystems, nach dem Anlegen des virtuellen Laufwerks und bevor das virtuelle Laufwerk die Schreibaufforderung von dem Dateisystem empfängt; und/oder Melden des virtuellen Laufwerks an ein Ressourcenverwaltungsmodul des Betriebssystems unter Verwendung einer Rundsendenachricht, wodurch das Ressourcenverwaltungsmodul benachrichtigt wird, das virtuelle Laufwerk neu zu benennen;
wobei die Virtuelle-Laufwerk-Anlegeeinheit umfasst: ein Initialisierungsmodul, ein Verarbeitungsmodul und ein Virtuelle-Laufwerk-Anlegemodul, wobei:
das Initialisierungsmodul konfiguriert ist zum Initialisieren einer physischen Laufwerksdatei entsprechend dem virtuellen Laufwerk;
das Verarbeitungsmodul konfiguriert ist zum Auffordern des Benutzers zum Liefern eines Schlüssels zum Verwenden des physischen Laufwerks, Verifizieren des durch den Benutzer gelieferten Schlüssels, Auslösen des Initialisierungsmoduls zum Vorgehen mit dem Initialisierungsprozess, der erforderlich ist, um das virtuelle Laufwerk anzulegen, nachdem die Verifikation erfolgreich gewesen ist, und Auslösen des Virtuelle-Laufwerk-Anlegemoduls zum Anlegen des virtuellen Laufwerks, nachdem das Initialisierungsmodul den Initialisierungsprozess beendet hat,
das Virtuelle-Laufwerk-Anlegemodul konfiguriert ist zum Anlegen des virtuellen Laufwerks, wenn durch das Verarbeitungsmodul ausgelöst.

## Revendications

1. Procédé de chiffrement de fichiers, comprenant une étape de création d'un disque virtuel, le disque virtuel étant visible dans un mode noyau et ayant un identifiant, le disque virtuel se référant à des volumes dans un système d'exploitation et correspondant à au moins un dispositif, le procédé comprenant en outre les étapes suivantes :
recevoir, dans le disque virtuel, une demande d'écriture provenant d'un système de fichiers ;
chiffrer, par le disque virtuel, des données dans la demande d'écriture ; et
notifier, par le disque virtuel, au système de fichiers d'écrire les données chiffrées sur un disque physique correspondant, de manière à ce que le système de fichiers écrive les données chiffrées sur le disque physique correspondant après avoir reçu une notification du disque virtuel ;
où le disque virtuel est visible uniquement en mode noyau et est invisible pour un utilisateur en mode utilisateur, où le mode utilisateur indique que le lancement de la demande d'écriture est exécuté dans un espace utilisateur ;
après la création du disque virtuel et avant que le disque virtuel ne reçoive la demande d'écriture du système de fichiers, le procédé comprend en outre les étapes suivantes :
notifier le disque virtuel à un module de gestion de disque du système d'exploitation ; et/ou notifier le disque virtuel à un module de gestion des ressources du système d'exploitation à l'aide d'un message de diffusion, notifiant ainsi au module de gestion des ressources de renuméroter le disque virtuel ;
où l'étape de création du disque virtuel comprend les étapes suivantes :
initialiser un fichier de disque physique correspondant au disque virtuel ;
demander à un utilisateur de fournir une clé pour utiliser le fichier de disque physique ;
vérifier la clé fournie par l'utilisateur ;
exécuter le processus d'initialisation requis pour la création du disque virtuel si la vérification a réussi ; et
créer le disque virtuel à l'aide d'un contrôle de création de disque virtuel après avoir terminé le processus d'initialisation.

2. Procédé de chiffrement de fichiers selon la revendication 1, dans lequel le système de fichiers envoie la demande d'écriture au disque virtuel par l'intermédiaire des étapes suivantes :
le système de fichiers reçoit, en mode noyau, la demande d'écriture du mode utilisateur ;
si la demande d'écriture comprend l'identifiant du disque virtuel, le système de fichiers envoie la demande d'écriture au disque virtuel.

3. Procédé de chiffrement de fichiers selon la revendication 1, dans lequel l'étape de notification du système de fichiers pour écrire les données chiffrées sur un disque physique correspondant comprend les étapes suivantes :
vérifier un fichier de disque physique correspondant au disque virtuel lui-même ;
remplacer l'identifiant du disque virtuel dans la demande d'écriture par l'identifiant du fichier de disque physique ; et
envoyer la demande d'écriture au système de fichiers ;
où l'étape dans laquelle le système de fichiers écrit les données chiffrées dans le disque physique correspondant après avoir reçu une notification du disque virtuel comprend que le système de fichiers écrit les données chiffrées contenues dans la demande d'écriture dans un fichier de disque physique correspondant à l'identifiant dans la demande d'écriture après avoir reçu la demande d'écriture du disque virtuel.

4. Procédé de déchiffrement de fichiers, comprenant une étape de création d'un disque virtuel, le disque virtuel étant visible en mode noyau et ayant un identifiant, le disque virtuel se référant à des volumes dans un système d'exploitation et correspondant à au moins un dispositif, le procédé comprenant en outre les étapes suivantes :
A. le disque virtuel redirige une demande de lecture, laquelle est reçue d'un système de fichiers, vers un disque physique de manière à ce que le système de fichiers récupère, sur le disque physique, les données requises par la demande de lecture ;
B. le disque virtuel reçoit les données récupérées par le système de fichiers depuis le disque physique, déchiffre les données reçues et envoie les données déchiffrées au système de fichiers de manière à ce que le système de fichiers fournisse les données déchiffrées à un utilisateur final ;
où le disque virtuel n'est visible qu'en mode noyau et est invisible pour un utilisateur en mode utilisateur ; après la création du disque virtuel et avant l'exécution de l'étape A, le procédé comprend en outre les étapes suivantes :
notifier le disque virtuel à un module de gestion de disque du système d'exploitation ; et/ou
notifier le disque virtuel à un module de gestion des ressources du système d'exploitation à l'aide d'un message de diffusion, notifiant ainsi au module de gestion des ressources de renuméroter le disque virtuel ;
où l'étape de création du disque virtuel comprend les étapes suivantes :
initialiser un fichier de disque physique correspondant au disque virtuel ;
demander à un utilisateur de fournir une clé pour utiliser le fichier de disque physique ;
vérifier la clé fournie par l'utilisateur ;
exécuter le processus d'initialisation requis pour la création du disque virtuel si la vérification a réussi ; et
créer le disque virtuel à l'aide d'un contrôle de création de disque virtuel après avoir terminé le processus d'initialisation.

5. Procédé de déchiffrement de fichiers selon la revendication 4, dans lequel, à l'étape A, le système de fichiers envoie la demande de lecture au disque virtuel par l'intermédiaire des étapes suivantes :
le système de fichiers reçoit, en mode noyau, la demande de lecture du mode utilisateur ;
si la demande de lecture comprend l'identifiant du disque virtuel, le système de fichiers envoie la demande de lecture au disque virtuel.

6. Procédé de déchiffrement de fichiers selon la revendication 4, dans lequel l'étape A comprend les étapes suivantes :
vérifier un fichier de disque physique correspondant au disque virtuel lui-même ;
remplacer l'identifiant du disque virtuel dans la demande de lecture par l'identifiant du fichier de disque physique ; et
envoyer la demande de lecture au système de fichiers ;
le système de fichiers envoie la demande de lecture au fichier de disque physique correspondant à l'identifiant contenu dans la demande de lecture, après avoir reçu la demande de lecture du disque virtuel, afin de récupérer les données requises par la demande de lecture dans le fichier de disque physique.

7. Appareil de chiffrement de fichiers, comprenant :
une unité de création de disque virtuel configurée pour créer un disque virtuel, le disque virtuel étant visible en mode noyau et ayant un identifiant, le disque virtuel se référant à des volumes dans un système d'exploitation et correspondant à au moins un dispositif ;
une unité de commande de disque virtuel configurée pour :
recevoir une demande d'écriture d'un système de fichiers,
chiffrer des données dans la demande d'écriture, et notifier au système de fichiers d'écrire les données chiffrées sur un disque physique correspondant ;
où le système de fichiers écrit les données chiffrées sur le disque physique correspondant après avoir reçu une notification du disque virtuel ;
où le disque virtuel est visible uniquement en mode noyau et est invisible pour un utilisateur en mode utilisateur, où le mode utilisateur indique que le lancement de la demande d'écriture est exécuté dans un espace utilisateur ;
une unité de notification de disque virtuel configurée pour notifier le disque virtuel à un module de gestion de disque du système d'exploitation, après la création du disque virtuel et avant que le disque virtuel ne reçoive la demande d'écriture du système de fichiers ;
et/ou pour notifier le disque virtuel à un module de gestion des ressources du système d'exploitation en utilisant un message de diffusion, notifiant ainsi au module de gestion des ressources de renuméroter le disque virtuel ;
où l'unité de création de disque virtuel comprend : un module d'initialisation, un module de traitement et un module de création de disque virtuel, où :
le module d'initialisation est configuré pour initialiser un fichier de disque physique correspondant au disque virtuel ;
le module de traitement est configuré pour demander à l'utilisateur de fournir une clé pour utiliser le disque physique, vérifier la clé fournie par l'utilisateur, déclencher le module d'initialisation pour engager le processus d'initialisation qui est requis pour créer le disque virtuel si la vérification a réussi, et déclencher le module de création de disque virtuel pour créer le disque virtuel après que le module d'initialisation a terminé le processus d'initialisation ;
le module de création de disque virtuel est configuré pour créer le disque virtuel lorsqu'il est déclenché par le module de traitement.

8. Appareil de chiffrement de fichiers selon la revendication 7, dans lequel l'unité de commande de disque virtuel comprend :
un module de réception, configuré pour recevoir la demande d'écriture du fichier système ;
un module de chiffrement, configuré pour chiffrer les données dans la demande d'écriture ;
un module de redirection, configuré pour : vérifier un fichier de disque physique correspondant au disque virtuel lui-même ; remplacer l'identifiant du disque virtuel dans la demande d'écriture par l'identifiant du fichier de disque physique ; et envoyer la demande d'écriture au système de fichiers ;
où le système de fichiers écrit les données chiffrées contenues dans la demande d'écriture dans le fichier de disque physique correspondant à l'identifiant dans la demande d'écriture après avoir reçu la demande d'écriture depuis le disque virtuel.

9. Appareil de déchiffrement de fichiers, comprenant :
une unité de création de disque virtuel, configurée pour créer un disque virtuel, le disque virtuel étant visible en mode noyau et ayant un identifiant, le disque virtuel se référant à des volumes dans un système d'exploitation et correspondant à au moins un dispositif ;
une unité de commande de disque virtuel, comprenant un module de redirection et un module de déchiffrement ; où
le module de redirection est configuré pour rediriger une demande de lecture reçue d'un système de fichiers vers un disque physique, de manière à ce que le système de fichiers récupère depuis le disque physique les données requises par la demande de lecture ; et
le module de déchiffrement est configuré pour recevoir les données récupérées par le système de fichiers depuis le disque physique, déchiffrer les données reçues et envoyer les données déchiffrées au système de fichiers afin que le système de fichiers puisse fournir les données déchiffrées à un utilisateur final ;
où le disque virtuel est visible uniquement en mode noyau et est invisible pour un utilisateur en mode utilisateur ;
une unité de notification de disque virtuel configurée pour notifier le disque virtuel à un module de gestion de disque du système d'exploitation, après la création du disque virtuel et avant que le disque virtuel ne reçoive la demande d'écriture du système de fichiers ;
et/ou pour notifier le disque virtuel à un module de gestion des ressources du système d'exploitation en utilisant un message de diffusion, notifiant ainsi au module de gestion des ressources de renuméroter le disque virtuel ;
où l'unité de création de disque virtuel comprend : un module d'initialisation, un module de traitement et un module de création de disque virtuel, où :
le module d'initialisation est configuré pour initialiser un fichier de disque physique correspondant au disque virtuel ;
le module de traitement est configuré pour demander à l'utilisateur de fournir une clé pour utiliser le disque physique, vérifier la clé fournie par l'utilisateur, déclencher le module d'initialisation pour engager le processus d'initialisation qui est requis pour créer le disque virtuel si la vérification a réussi, et déclencher le module de création de disque virtuel pour créer le disque virtuel après que le module d'initialisation a terminé le processus d'initialisation ;
le module de création de disque virtuel est configuré pour créer le disque virtuel lorsqu'il est déclenché par le module de traitement.
